# EUROPÄISCHE PATENTANMELDUNG

(11) **EP 1 837 823 A1**
(43) Veröffentlichungstag der Anmeldung: **26.09.2007**
(21) Anmeldenummer: 07104041.4
(22) Anmeldetag: 13.03.2007
(51) Int. Cl.: G06Q 30/00

(54) **Verfahren zur Steuerung einer Anwendung**

(30) Priorität: 22.03.2006 DE 102006013162
(71) Anmelder: ROBERT BOSCH GMBH, 70442 Stuttgart (DE)
(72) Erfinder: Koch, Hartwig, 31139, Hildesheim (DE); Hinrichs, Andreas, 31199, Diekholzen (DE); Vogel, Peter, 31139, Hildesheim (DE); May, Thomas, 38302, Wolfenbuettel (DE); Hornburg, Bjoern, 31188, Holle (DE); Mauler, Karsten, 38159, Vechelde (DE); Grun, Daniel, 31135, Hildesheim (DE); Yang, Yiwen, 31141, Hildesheim (DE)

(57) **Zusammenfassung**

Es wird ein Verfahren zur Steuerung einer Anwendung mit zumindest einem einstellbaren Parameter offenbart, bei dem spezifische Einstellungen in jeweils einem Nutzerprofil zusammengefasst werden, so dass durch Auswählen eines Nutzerprofils die Anwendungen mit den entsprechenden spezifischen Einstellungen gesteuert wird. Um gleichzeitig Einstellungen verschiedener Nutzer berücksichtigen zu können, ist erfindungsgemäß vorgesehen, dass durch Verknüpfen der Einstellungen mehrerer Nutzerprofile ein Kombinationsprofil generiert wird.

## Beschreibung

Die vorliegende Erfindung betrifft ein Verfahren zur Steuerung einer Anwendung mit zumindest einem einstellbaren Parameter, bei dem spezifische Einstellungen in jeweils einem Nutzerprofil zusammengefasst werden, so dass durch Auswählen eines Nutzerprofils die Anwendung mit den entsprechenden spezifischen Einstellungen gesteuert wird.

Bei technischen, bevorzugt elektronischen Geräten werden dort implementierte Anwendungen üblicherweise mittels mehrerer einstellbarer Parameter gesteuert, die in Nutzerprofilen zusammengefasst werden können. Es ist bekannt, dass dabei für eine Anwendung die Nutzerprofile für mehrere verschiedene Personen bzw. Nutzer bereitgehalten werden, so dass ein Nutzer lediglich durch Auswahl seines entsprechenden Nutzerprofils gleichzeitig alle Parameter zur Ansteuerung der Anwendung seinen persönlichen Anforderungen und Wünschen gemäß einstellt. Hierbei kann ein Nutzer auch mehrere Nutzerprofile für unterschiedliche Situationen definieren. Darüber hinaus kann es ein Nutzerprofil geben, das definiert, wie Anwendungen definiert sind, wenn sie von einem System automatisch gestartet werden.

Bei einer Anwendung zum Speichern und Abspielen von Audiodateien, beispielsweise einem MP3-Player, kann der Nutzer jeder der Audiodateien eine persönliche Bewertung zuordnen. Beispielsweise bei dem Gerät iPod der Firma Apple erfolgt dies über eine Vergabe von 1 bis 5 Sternen. Auf diese Weise kann der Nutzer Audiodateien bzw. Lieder gemäß dieser vorgenommenen Bewertung auswählen, um beispielsweise nur seine eigenen persönlichen Lieblingslieder durch das Gerät bzw. die Anwendung abspielen zu lassen.

Bei mehreren Nutzern weichen allerdings die Bewertungen der einzelnen Lieder oftmals voneinander ab. Dies führt dann bei einem Abspielen einer Liederfolge, beispielsweise in einem Kraftfahrzeug, in dem sich mehrere Personen für eine gemeinsame Fahrt befinden, dazu, dass in der Regel nur einer dieser Mitfahrer seine bevorzugten Lieder hören wird. Wenn das Nutzerprofil eines anderen Mitfahrers mit einer anderen Bewertung der einzelnen Lieder verwendet werden soll, muss das zunächst ausgewählte Nutzerprofil deaktiviert und das andere Nutzerprofil ausgewählt bzw. aktiviert werden.

Aber auch durch ein derartiges Umschalten zwischen den einzelnen Nutzerprofilen bleibt die nachteilige Situation bestehen, dass immer nur die Einstellungen bzw. die Bewertungen eines der mehreren Nutzer vorgenommen bzw. berücksichtigt werden. Die Präferenzen der übrigen mitfahrenden Nutzer bleiben dabei ohne Einfluss auf die Steuerung der Audio-Anwendung.

Vor diesem Hintergrund ist es die Aufgabe der vorliegenden Erfindung, die Möglichkeit zur Steuerung einer Anwendung mittels in Nutzerprofilen bereitgestellter Einstellungen bereitzustellen, bei der die Einstellungen mehrerer verschiedener Nutzerprofile gleichzeitig berücksichtigt werden.

Diese Aufgabe wird durch ein Verfahren mit den Merkmalen des Anspruchs 1 sowie eine Bedieneinrichtung mit den Merkmalen des Anspruchs 13 gelöst.

Bei einem Verfahren der eingangs beschriebenen Art ist erfindungsgemäß vorgesehen, dass durch Verknüpfen der Einstellungen mehrerer Nutzerprofile ein Kombina-tionsprofil generiert wird. Die Einstellungen für dieses neue, als Kombinationsprofil bezeichnete Nutzerprofil werden vorgenommen, indem die Einstellungen der Nutzerprofile berücksichtigt werden, die weiteren realen Nutzern zugeordnet sind. Dies führt dazu, dass hiermit die Interessen und Präferenzen mehrerer Nutzer sich in dem Kombinationsprofil widerspiegeln, wodurch mögliche Konflikte vermieden werden, die durch die bisherige ausschließliche Berücksichtigung der Vorlieben oder Gewohnheiten eines einzigen Anwenders entstanden sind.

Zur weiteren Steigerung der Benutzerfreundlichkeit wird das Kombinationsprofil durch Kombinieren mehrerer Nutzerprofile für mehrere Anwendungen generiert. Derartige Anwendungen können in einem Kraftfahrzeug beispielsweise Audio-Anwendungen, ein Navigationssystem und/oder eine Heizungsanlage bzw. Klimaanlage sein.

In vorteilhafter Weise werden mehrere Nutzerprofile in einer Vorrichtung zur Durchführung einer Anwendung gespeichert. Dies ermöglicht die Bereitstellung des Kombinationsprofils ohne ein Erfordernis, Daten zwischen mehreren Vorrichtungen bzw. Anwendungen zu übertragen.

Weiterhin vorteilhaft können mehrere Nutzerprofile auf mehreren Vorrichtungen zur Durchführung einer oder mehrerer Anwendungen verteilt gespeichert werden. Dies eröffnet die Möglichkeit einer dezentralen Datenspeicherung, so dass jede Anwendung die eigenen Nutzerprofildaten selbst verwaltet und abspeichert.

Eine bevorzugte Weiterführung des erfindungsgemäßen Verfahrens sieht vor, dass mehrere Nutzerprofile für zumindest eine Anwendung in einem zentralen Profilspeicher gespeichert werden. Dieser zentrale Speicher kann somit eine Schnittstelle zwischen den verschiedenen Anwendungen und den gespeicherten Profildaten bilden, so dass sämtliche Profilinformationen an einer einzigen, zentralen Stelle verwaltet werden.

Um einzelne Präferenzen stärker zu berücksichtigen, können bei dem Verknüpfen der Parameter aus verschiedenen Nutzerprofilen diese unterschiedlich gewichtet werden. Bevorzugt erfolgt das Verknüpfen der Parameter aus verschiedenen Nutzerprofilen in Abhängigkeit von Berechtigungen der Nutzerprofile bzw. der Parameter. Weiterhin sind in vorteilhafter Weise Nutzerprofile berechtigt sind, bei dem Verknüpfen der Parameter andere Nutzerprofile bzw. Parameter von einer Berücksichtigung auszuschließen. Dadurch wird ermöglicht, dass beispielsweise dem Nutzerprofil des Fahrers gegenüber den Nutzerprofilen der übrigen Mitfahrer eine größere Bedeutung verschafft wird. Bei der Einstellung eines Temperaturwertes in dem Kombinationsprofil kann dies bewirken, dass dieser dem Temperaturwunsch des Fahrers näher liegt als denen der Mitfahrer.

Bei einer vorteilhaften Verknüpfung wird eine logische Und-Verknüpfung einzelner Parameter durchgeführt. Dies führt zur Berücksichtigung der Gemeinsamkeiten der zugrunde liegenden Nutzerprofile. Bei einer mit dieser Verknüpfung erzeugten Liederliste enthält diese nur die Lieder, die in allen Nutzerprofilen enthalten sind.

Weiterhin vorteilhaft wird bei der Verknüpfung eine logische Oder-Verknüpfung einzelner Parameter durchgeführt. Gerade in dem Fall, wenn keine oder nur wenige Gemeinsamkeiten vorliegen, kann durch die Oder-Verknüpfung eine relativ ausgewogene Berücksichtigung der Nutzer stattfinden. Eine Variation der Oder-Verknüpfung ist eine Summenbildung, um beispielsweise Adressen, Points-of-Interests, Lesezeichen und/oder Sendereinstellungen zu übernehmen.

Bei einer weiteren Verknüpfung wird eine Mittelwert-Bildung durchgeführt. Dies kann insbesondere bei der Einstellung für die Temperatur einer Klimaanlage einen sinnvollen Kompromiss darstellen.

Ebenfalls vorteilhaft wird bei dem Verknüpfen eine Mehrheitsentscheidung durchgeführt. Dies führt insbesondere bei mehreren Nutzern dazu, dass mehrfach auftretende Gemeinsamkeiten stärker gewichtet werden. Eine stark abweichende Einzeleinstellung tritt somit etwas in den Hintergrund. Erfindungsgemäß kann auch jede andere logische oder arithmetische Verknüpfung durchgeführt werden, beispielsweise Summenbildung, Minimum-/Maximumbildung, Bilden einer Vereinigungsmenge, einer Schnittmenge oder eines Medianwertes.

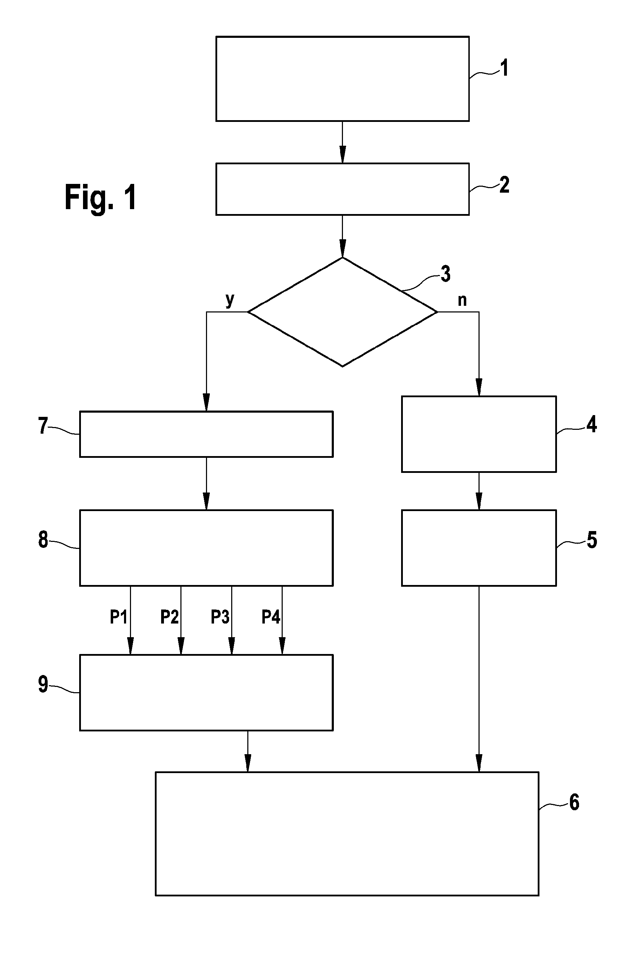

Nachfolgend wird die Erfindung anhand der detaillierten Beschreibung unter Bezug auf die beigefügte Figur beispielhaft näher erläutert. Diese zeigt in
- Figur 1 -: schematisch den prinzipiellen Ablauf für ein Ausführungsbeispiel des erfindungsgemäßen Verfahrens.

Bei dem in der Figur 1 dargestellten Ausführungsbeispiel gelangt das erfindungsgemäße Verfahren in einem Fahrerinformationssystem (FIS) zur Durchführung, das von mehreren Nutzern bzw. Fahrzeuginsassen in einem Kraftfahrzeug benutzt werden kann. Üblicherweise haben die Nutzer unterschiedliche Interessen und Gewohnheiten in Bezug auf die von dem Fahrerinformationssystem angebotenen Informationen und Dienste. Insbesondere bei der Musikauswahl, beispielsweise bei der Auswahl eines Radiosenders mit einer jeweiligen Musikkategorie (Klassik, Pop, Rock etc.) oder von in Audiodateien bereitgestellten Liedern (MP3-Player) ist die Kombination der verschiedenen Interessen und Präferenzen der Nutzer sinnvoll, um eine für alle Fahrzeuginsassen angenehme Atmosphäre während der gemeinsamen Fahrt zu schaffen.

Das Fahrerinformationssystem ermittelt zunächst verschiedene Profile für eine bestimmte Anwendung bzw. Applikation. Symbolisiert in der Figur 1 durch den Kasten 1, erkennt das Fahrerinformationssystem, dass sich verschiedene Personen bzw. Nutzer in dem Innenraum des Kraftfahrzeugs befinden, denen ein eigenes Nutzerprofil zugeordnet ist, also unterschiedliche Nutzerprofile für die Anwendung vorhanden sind. Die Personenidentifikation kann hierbei über eine manuelle Eingabe an einer entsprechenden Vorrichtung des Fahrerinformationssystems erfolgen. Eine alternative Möglichkeit der Erkennung besteht aber auch über bestimmte Funkverfahren, beispielsweise RFID, Bluetooth/WLAN etc.

Die erkannten Nutzerprofile werden von dem Fahrerinformationssystem geladen, so dass sie für eine Vorauswertung zur Verfügung stehen. Dies wird durch den Kasten 2 dargestellt. Im Folgenden existieren zwei prinzipiell verschiedene Wege für die Fortführung des Verfahrens. Diese beiden Alternativen unterscheiden sich dadurch, dass bei einer der beiden möglichen Fortführungen erfindungsgemäß ein Kombinationsprofil generiert wird, während bei der anderen Fortsetzung des Verfahrens kein Kombinationsprofil sondern in bekannter Weise nur eines der vorhandenen Nutzerprofile berücksichtigt wird. Dies wird durch die Verzweigung 3 in der Figur 1 gezeigt.

Die erste Alternative sieht vor, dass zunächst ein einziges der möglichen Nutzerprofile ausgewählt wird, wie in dem Kasten 4 dargestellt ist. Anschließend wird, symbolisiert durch den Kasten 5, dieses ausgewählte Nutzerprofil in üblicher Weise ausgewertet und zur Steuerung der Anwendung verwendet. Das ausgewählte Nutzerprofil wird gemäß Kasten 6 an die Applikation übergeben, so dass die entsprechenden Einstellungen der einstellbaren Parameter zur Steuerung vorgenommen werden. Das übergebene Nutzerprofil steht nun der Applikation nach dem Starten derselben zur Verfügung, bis diese Applikation beendet wird.

Ausgehend von der Entscheidung 3, ein Kombinationsprofil zu generieren, erstellt das Fahrerinformationssystem aus den geladenen Nutzerprofilen aktive Nutzergruppen, gezeigt ist dies mit dem Kasten 7. Hierbei enthält eine Nutzergruppe jeweils die für eine Anwendung bzw. Applikation relevanten Nutzerprofile. Es ist durchaus möglich, dass eine Person verschiedene Nutzerprofile besitzt, beispielsweise ein lokales Musikprofil und ein weiteres Musikprofil auf einem externen Endgerät, welches der Nutzer mit in das Fahrzeug gebracht hat. Dem Nutzer kann auch neben einem Musikprofil ein Nutzerprofil für die Ansteuerung der Klimaanlage in dem Kraftfahrzeug zugeordnet sein. Ferner ist denkbar, dass Nutzerprofile nicht nur Personen, sondern auch Geräten oder Anwendungen zugeordnet sind.

Nachdem das Fahrerinformationssystem erkannt hat, dass verschiedene potentielle Nutzer mit ihren jeweiligen Nutzerprofilen die Dienste des Fahrerinformationssystem nutzen möchten, erfolgt eine Analyse dieser relevanten Profile, in der Figur 1 durch den Kasten 8 dargestellt. Hierbei kann in einer automatischen Vorauswertung grundsätzlich geprüft werden, ob eine Applikation entsprechend den Profilwünschen neu gestartet werden soll oder beendet werden soll.

Das Fahrerinformationssystem sollte bevorzugt in der Lage sein, einzelne Nutzerprofile mit Prioritäten zu versehen, um eine Gewichtung der Bedeutung der einzelnen Nutzerprofile zu erreichen. So kann beispielsweise das Nutzerprofil des Fahrers ein höheres Gewicht zugeordnet werden. Um Konflikte zu vermeiden, sollte nicht jeder Nutzer selbst die ihm zugeordnete Priorität festlegen. Diese Festlegung kann beispielsweise durch das Fahrerinformationsprofil, welches das Kombinationsprofil erstellt, oder vorab durch einen privilegierten Nutzer erfolgen. Der privilegierte Nutzer kann der Fahrer sein. Aufgrund der festgelegten Priorität werden einzelne Profileinstellungen gegenüber anderen bei der Verknüpfung stärker berücksichtigt. In einem Extremfall kann für bestimmte Bereiche nur das Nutzerprofil des Nutzers mit der höchsten Priorität berücksichtigt werden. Dies ist beispielsweise bei den Einstellungen von Außen- und/oder Rückspiegel erforderlich, bei der nur die Einstellungen aus dem Nutzerprofil des Fahrers übernommen werden sollten.

Weiterhin besteht die Möglichkeit, dass während einer laufenden Anwendung eine Veränderung der einstellbaren Parameter entsprechend dem neu zu generierenden Kombinationsprofil durchgeführt wird. Die relevanten Profile sind in der Figur 1 mit P1, P2, P3 und P4 bezeichnet und werden, dargestellt durch den Kasten 9, miteinander verknüpft, um das Kombinationsprofil zu erzeugen. Die Verknüpfung wird nachfolgend anhand beispielhaft aufgeführter Mechanismen zum Mischen von Nutzerprofilen erläutert. Schließlich wird das neu generierte Kombinationsprofil an die Applikation übergeben, so dass die Applikation mit den Einstellungen des generierten Kombinationsprofils gesteuert wird, symbolisiert wird dies in der Figur 1 durch den Kasten 6.

Falls divergierende Interessen der Nutzer und Einstellungen in den Nutzerprofilen vorliegen, soll mit Hilfe des erfindungsgemäßen Verfahrens ein möglichst optimaler Abgleich bzw. Ausgleich durch eine Profilmischung erfolgen. Demzufolge wird ein gemeinsames bzw. das Kombinationsprofil generiert, das anschließend den jeweiligen Anwendungen bzw. Applikationen übergeben wird. Oder es werden in dem System entsprechende Einstellungen vorgenommen, beispielsweise das Starten oder Beenden einer bestimmten Anwendung.

In dem beschriebenen Beispiel wird sowohl das Laden als auch das Kombinieren der Nutzerprofile von einer zentralen Einheit, dem Fahrerinformationssystem, außerhalb der Applikationen durchgeführt. Erst das generierte Kombinationsprofil wird der jeweiligen Anwendung übergeben. In einer alternativen Ausführungsform wird nur die Auswahl der Nutzerprofile durch das zentrale Fahrerinformationssystem durchgeführt. Hierbei werden dann die Kennungen der ausgewählten Nutzer an die Anwendungen übergeben, so dass die Applikationen ihre Daten selbst verwalten und die Kombination der Nutzerprofile jeweils innerhalb der Applikation erfolgt.

Auch ist denkbar, dass mehrere Anwendungen extern des Fahrerinformationssystems die vorhandenen Nutzerprofile miteinander verknüpfen, um ein Kombinationsprofil zu generieren. Dies extern erstellte Kombinationsprofil kann anschließend dem Fahrerinformationssystem übertragen. Darüber hinaus ist ein derartiger Abgleich auch auf einem zentralen Server möglich, von dem das gemischte Nutzerprofil anschließend in das Fahrzeug an das Fahrerinformationssystem übertragen wird.

Für das Mischen bzw. Verknüpfen der Nutzerprofile stehen verschiedene Mechanismen zur Verfügung. Bei der Auswahl von Musiktiteln bzw. Liedern sind insbesondere die möglichen Verknüpfungen Und-Verknüpfung, Oder-Verknüpfung und/oder Mehrheitsentscheidung sinnvoll. Bei der Und-Verknüpfung werden nur Musiktitel abgespielt, die in allen relevanten Nutzer- bzw. Musikprofilen vorhanden sind bzw. eine gleichwertige Bewertung aufweisen. Diese Verknüpfung berücksichtigt folglich die Gemeinsamkeiten zwischen den einzelnen Musikprofilen. Diese Schnittmenge kann aber gegebenenfalls nur einige wenige Elemente oder gar im Extremfall kein Element enthalten.

Bei der Oder-Verknüpfung werden dagegen die Musiktitel abgespielt, die zumindest in einem der mehreren Musikprofile eine entsprechend gleichwertige Bewertung aufweisen. Auf diese Weise wird sichergestellt, dass die zur Verfügung stehende Liste für die Musiktitelauswahl nicht leer ist. Schließlich können durch eine Mehrheitsentscheidung bei der Verknüpfung zur Bildung des Kombinationsprofils diejenigen Musiktitel höher gewichtet werden, die zumindest bei mehreren Anwendern gleichwertig beurteilt werden. Wenn die Bewertung in einem Musikprofil eines einzelnen Nutzers erheblich von den Beurteilungen in den anderen Musikprofilen abweicht, werden die Musikprofile nicht gleich behandelt, sondern die mehrheitlich übereinstimmende Bewertung der Musiktitel kommt bei der Liederauswahl verstärkt zur Geltung.

Die vorstehend beschriebenen Verknüpfungen sind aber nicht für alle Anwendungen und Applikationen optimal. Für die Ansteuerung einer Klimaanlage in dem Fahrzeug ist die bevorzugte Temperatur verschiedener Nutzer nicht sinnvoll durch eine Und- bzw. Oder-Verknüpfung zu kombinieren. In diesem Fall kann beispielsweise eine Mittelwertbildung der in den einzelnen Nutzerprofilen vorhandenen Temperaturwerte einen gelungenen Kompromiss für die Ansteuerung der Klimaanlage darstellen. Hier besteht zusätzlich die Möglichkeit, dass im Vorfeld bestimmte Toleranzbereiche ausgewählt werden können, innerhalb derer der Parameter eingestellt werden kann. So kann beispielsweise zur Ansteuerung der Temperatur für eine Klimaanlage ein Toleranzbereich zwischen 18 und 22°C vorbestimmt werden. Fällt anschließend der gebildete Wert des Kombinationsprofils außerhalb dieses Toleranzbereiches, so wird die nächstliegende Toleranzbereichsgrenze als Temperatureinstellung für das Kombinationsprofil übernommen.

Bei der Erstellung des Kombinationsprofils kann weiterhin der Aspekt eines Profilsausschlusses berücksichtigt werden. Wenn bei mehreren erkannten Nutzerprofilen eine weitgehende Übereinstimmung bei der Mehrheit erkannt wurde, besteht die Möglichkeit, dass wenige abweichende Nutzerprofile oder zumindest ein Teil der Einstellungen in diesen ignoriert werden können. In diesem Fall kann beispielsweise vorgesehen sein, dass das Fahrerinformationssystem eine Abfrage durchführt, ob die abweichenden Nutzerprofile ignoriert werden sollen. Bei einer Zustimmung wird somit eine möglichst übereinstimmende Abdeckung des Kombinationsprofils mit der Mehrheit der Nutzerprofile erreicht.

Auch können für die einzelnen einstellbaren Parameter Ausschlusskriterien festgelegt werden. Diese Ausschlusskriterien können entweder absolut gelten, d.h. eine entsprechende Einstellung eines Parameters ist überhaupt nicht möglich, oder sie können relativ gelten, d.h. sie unterliegen einer Kondition. Beispielsweise kann eine bestimmte Musikkategorie zu einer festgelegten Tageszeit ausgeschlossen sein.

Das erfindungsgemäße Verfahren mit dem neu generierten Kombinationsprofil ist bei vielen Anwendungen einsetzbar. Dies kann in der Musikauswahl beispielsweise Senderauswahl an dem Autoradio oder der Musiktitelauswahl eines MP3-Players eingesetzt werden. Weitere Anwendungen ergeben sich beispielsweise bei einem Internet-Browser, so dass Lesezeichen bzw. Bookmarks verschiedener Nutzer zusammengefasst werden können. Weiterhin können Point-of-Interests, die die Nutzer jeweils in einer Liste festgelegt haben, auf diese Weise kombiniert und/oder ergänzt werden, um einen größtmöglichen Ausgleich unterschiedlicher Interessen zu finden.

In dem vorstehend beschriebenen Ausführungsbeispiel ist dem Fahrerinformationssystem bekannt, dass sich verschiedene Nutzer mit jeweils zugeordneten Nutzerprofilen im Kraftfahrzeug befinden. Somit kann die Generierung eines Kombinationsprofils prinzipiell automatisch gestartet werden. Da es sich aber hierbei um einen bedeutenden Eingriff in die Steuerung des Fahrerinformationssystems handelt, kann gegebenenfalls vorgesehen sein, dass das Kombinationsprofil nur nach einer Betätigung erzeugt und verwendet wird.

Dies kann beispielsweise mit einer Profil-Kombinationstaste erzeugen, deren Betätigung zwischen der Verwendung eines Kombinationsprofils und einem einzelnen Nutzerprofil umschaltet. Weiterhin ist eine in einem Display dargestellt Abfrage mit anschließender Bestätigung durch Drücken einer "OK-/Enter-Taste, eine Bedienung mittels Sprachsteuerung und/oder einer Fernbedienung möglich.

## Patentansprüche

1. Verfahren zur Steuerung einer Anwendung mit zumindest einem einstellbaren Parameter, bei dem spezifische Einstellungen in jeweils einem Nutzerprofil zusammengefasst werden, so dass durch Auswählen eines Nutzerprofils die Anwendung mit den entsprechenden spezifischen Einstellungen gesteuert wird, **dadurch gekennzeichnet, dass** durch Verknüpfen der Einstellungen mehrerer Nutzerprofile ein Kombinationsprofil generiert wird.

2. Verfahren nach Anspruch 1, **dadurch gekennzeichnet, dass** das Kombinationsprofil durch Kombinieren mehrerer Nutzerprofile für mehrere Anwendungen generiert wird.

3. Verfahren nach Anspruch 1 oder 2, **dadurch gekennzeichnet, dass** mehrere Nutzerprofile in einer Vorrichtung zur Durchführung einer Anwendung gespeichert werden.

4. Verfahren nach einem der vorstehenden Ansprüche, **dadurch gekennzeichnet, dass** mehrere Nutzerprofile auf mehreren Vorrichtungen zur Durchführung einer oder mehrerer Anwendungen verteilt gespeichert werden.

5. Verfahren nach einem der vorstehenden Ansprüche, **dadurch gekennzeichnet, dass** mehrere Nutzerprofile für mindestens eine Anwendung in einem zentralen Profilspeicher gespeichert werden.

6. Verfahren nach einem der vorstehenden Ansprüche, **dadurch gekennzeichnet, dass** bei dem Verknüpfen der Parameter aus verschiedenen Nutzerprofilen diese unterschiedlich gewichtet werden.

7. Verfahren nach Anspruch 6, **dadurch gekennzeichnet, dass** das Verknüpfen der Parameter aus verschiedenen Nutzerprofilen in Abhängigkeit von Berechtigungen der Nutzerprofile bzw. der Parameter erfolgt.

8. Verfahren nach Anspruch 7, **dadurch gekennzeichnet, dass** Nutzerprofile berechtigt sind, bei dem Verknüpfen der Parameter andere Nutzerprofile bzw. Parameter von einer Berücksichtigung auszuschließen.

9. Verfahren nach einem der vorstehenden Ansprüche, **dadurch gekennzeichnet, dass** bei dem Verknüpfen eine logische Und-Verknüpfung einzelner Parameter durchgeführt wird.

10. Verfahren nach einem der vorstehenden Ansprüche, **dadurch gekennzeichnet, dass** bei dem Verknüpfen eine logische Oder-Verknüpfung einzelner durchgeführt wird.

11. Verfahren nach einem der vorstehenden Ansprüche, **dadurch gekennzeichnet, dass** bei dem Verknüpfen eine Mittelwert-Bildung durchgeführt wird.

12. Verfahren nach einem der vorstehenden Ansprüche, **dadurch gekennzeichnet, dass** bei dem Verknüpfen eine Mehrheitsentscheidung durchgeführt wird.

13. Bedienvorrichtung zum expliziten Auswählen von Profilen, die mit einem Verfahren nach einem der vorstehenden Ansprüche gemischt werden, wobei einzelne Profile nacheinander ausgewählt und **dadurch** in die Verknüpfung einbezogen werden können.
